# EUROPÄISCHE PATENTSCHRIFT

(11) **EP 3 657 133 B1**
(45) Veröffentlichungstag und Bekanntmachung des Hinweises auf die Patenterteilung: **06.01.2021**
(21) Anmeldenummer: 18207168.8
(22) Anmeldetag: 20.11.2018
(51) Int. Cl.: G01D 5/244, G01D 11/24

(54) **SENSOREINHEIT UND POSITIONSMESSEINRICHTUNG MIT DIESER SENSOREINHEIT**
SENSOR UNIT AND POSITION MEASURING DEVICE WITH THIS SENSOR UNIT
UNITÉ DE CAPTEUR ET DISPOSITIF DE MESURE DE POSITION DOTÉ D'UNE TELLE UNITÉ DE CAPTEUR

(43) Veröffentlichungstag der Anmeldung: 27.05.2020
(73) Patentinhaber: Dr. Johannes Heidenhain GmbH, 83301 Traunreut (DE)
(72) Erfinder: ONISCHKE, Jana, 81929 München (DE); GÜNTERT, Jürgen, 83278 Traunstein (DE); ANGERER, Roman, 83435 Bad Reichenhall (DE); INSELSPERGER, Markus, 83530 Schnaitsee (DE); GANZER, Stefan, 83339 Chieming (DE)

(56) Entgegenhaltungen:
- DE-U1- 29 703 098
- US-A1- 2004 032 345
- US-A1- 2011 227 563

## Beschreibung

### BEZEICHNUNG DER ERFINDUNG

Sensoreinheit und Positionsmesseinrichtung mit dieser Sensoreinheit

### GEBIET DER TECHNIK

Die Erfindung betrifft eine Sensoreinheit zum Abtasten einer magnetischen Skala gemäß dem Anspruch 1 sowie eine Positionsmesseinrichtung mit dieser Sensoreinheit gemäß dem Anspruch 10.

Sensoreinheiten werden beispielsweise für Winkelmessgeräte zur Bestimmung der Winkelstellung zweier relativ zueinander drehbarer Maschinenteile verwendet. Bei Positionsmesseinrichtungen, die auf einem magnetischen Abtastprinzip beruhen, werden häufig MR-Sensoren eingesetzt, die beispielsweise mit einem Stator eines Winkelmessgeräts fest verbunden sind. Diesen MR-Sensoren gegenüber liegend befindet sich eine Skala, auf dem in periodischen Abständen magnetische Nord- und Südpole aufgebracht sind, und welches mit dem Rotor des Winkelmessgeräts drehfest verbunden ist. Während der Relativdrehung zwischen Rotor und Stator werden durch die MR-Sensoren von der Winkelstellung abhängige Signale erzeugt. Diese Signale werden dann in einer Auswerteelektronik weiterverarbeitet.

Alternativ können nach diesem Prinzip auch Positionen resultierend aus linearen Relativbewegungen bestimmt werden.

Häufig werden derartige Sensoreinheiten in Messgeräten für elektrische Antriebe, zur Bestimmung der Relativbewegung beziehungsweise der Relativlage von entsprechenden Maschinenteilen eingesetzt. In diesem Fall werden die erzeugten Positionswerte einer Folgeelektronik zur Ansteuerung der Antriebe über eine entsprechende Schnittstellenanordnung zugeführt.

### STAND DER TECHNIK

In der DE 100 182 269 B4 der Anmelderin wird eine Abtasteinheit für eine magnetische Positionsmesseinrichtung beschrieben, bei der MR-Detektoren verwendet werden.

In der Druckschrift US 2011/0227563 A1 wird eine Anordnung eins magnetischen Sensors beschrieben, bei dem eine MR-Struktur zwischen einer vergleichsweise massiven Schutzschicht und einer Leiterplatte platziert ist.

In der Druckschrift US 2004/0032345 A1 wird ein Magnetsensor offenbart, bei dem der Sensor auf einem Substrat in einem IC verpackt ist, der auf einer Leiterplatte sitzt, die am Sensorgehäuse anstößt.

### ZUSAMMENFASSUNG DER ERFINDUNG

Der Erfindung liegt die Aufgabe zugrunde, eine Sensoreinheit zum Abtasten einer magnetischen Skala für eine Positionsmesseinrichtung zu schaffen, die einfach herstellbar ist, wobei mit der Sensoreinheit dennoch überaus genaue Positionswerte ermittelbar sind.

Diese Aufgabe wird erfindungsgemäß durch die Merkmale des Anspruches 1 gelöst.

Die Sensoreinheit ist zum Abtasten einer magnetischen Skala geeignet und umfasst eine für Magnetfelder empfindliche Detektorstruktur, eine Leiterplatte und ein Gehäuse, wobei die Detektorstruktur auf einem Substrat angeordnet ist. Das Substrat ist auf einer ersten Oberfläche der Leiterplatte derart befestigt, dass dieses zwischen der Detektorstruktur und der Leiterplatte angeordnet ist. Zur genauen Positionierung der Detektorstruktur relativ zum Gehäuse weist die erste Oberfläche zumindest eine Teilfläche auf, die neben dem Substrat auskragend beziehungsweise überstehend angeordnet ist. Die auskragende Teilfläche schlägt am Gehäuse an. Ergänzend weist das Substrat eine Stirnfläche auf, die am Gehäuse anschlägt.

Die Detektorstruktur, das Substrat und die Leiterplatte können einem Detektorelement zugeordnet werden.

Das Substrat ist so auf der Leiterplatte befestigt, dass die Detektorstruktur elektrisch mit Leiterbahnen beziehungsweise Pads der Leiterplatte kontaktiert ist. Entsprechend sind im Substrat Durchkontaktierungen beziehungsweise Vias vorgesehen.

Mit Vorteil schlägt die auskragende Teilfläche an drei oder mehr voneinander beabstandeten Auflagepunkten am Gehäuse an. Insbesondere befindet sich die Teilfläche (damit befinden sich auch die Auflagepunkte) am Rand der ersten Oberfläche der Leiterplatte.

In weiterer beziehungsweise alternativer Ausgestaltung der Erfindung schlägt die Stirnfläche an drei voneinander beabstandeten Anschlagpunkten am Gehäuse an. Insbesondere kann dann das Gehäuse Auskragungen aufweisen, an denen die Stirnfläche anschlägt.

Die drei Auflagepunkte befinden sich insbesondere in einer ersten Ebene und die Anschlagpunkte in einer zweiten Ebene, wobei diese Ebenen nicht identisch sind beziehungsweise nicht aufeinander zu liegen kommen.

Mit Vorteil weist das Substrat eine Stirnfläche auf, die einen ersten Bereich und einen zweiten Bereich umfasst. Die beiden Bereiche sind winklig zueinander angeordnet, wobei zumindest einer der Anschlagpunkte am ersten Bereich und einer der Anschlagpunkte am zweiten Bereich verortet ist. Beispielsweise können am ersten Bereich zwei Anschlagpunkte sein und am zweiten Bereich ein Anschlagpunkt.

In weiterer Ausgestaltung der Erfindung ist das Substrat aus Glas hergestellt. Alternativ kann das Substrat aus einem Glaskeramik- oder einem KeramikMaterial hergestellt sein.

Das Substrat weist Durchkontaktierungen auf, insbesondere weist das Substrat integrierte Metallkontakte auf, wobei sich die Durchkontaktierungen von der ersten Oberfläche des Substrats bis zur zweiten Oberfläche des Substrats erstrecken.

Vorteilhafterweise weist die Leiterplatte zumindest eine Ausnehmung auf, wobei geometrisch betrachtet eine Gerade das Substrat schneidet, wobei die Gerade orthogonal zur zweiten Oberfläche des Substrats orientiert ist und durch die Ausnehmung hindurch verläuft.

Mit Vorteil weist das Gehäuse ein Fenster auf, wobei die Detektorstruktur im Fenster angeordnet ist. In diesem Fall kann das Fenster durch eine Abdeckung, beispielsweise ein Folie oder eine Membran, verschlossen sein.

In weiterer Ausgestaltung der Erfindung ist die Leiterplatte bezüglich einer Ebene parallel zur ersten Oberfläche der Leiterplatte sowohl in einer ersten Richtung als auch in einer dritten Richtung relativ zum Substrat auskragend angeordnet. Die erste Richtung ist insbesondere orthogonal zur dritten Richtung orientiert. Die erste Oberfläche der Leiterplatte erstreckt sich sowohl in der ersten Richtung als auch in der dritten Richtung.

Gemäß einem weiteren Aspekt umfasst die Erfindung eine Positionsmesseinrichtung, die eine Sensoreinheit sowie eine Skala aufweist. Die Skala ist durch die Sensoreinheit in einer Weise abtastbar, dass eine Relativverschiebung beziehungsweise eine Relativposition zwischen der Skala und der Sensoreinheit in einer ersten Richtung messbar ist. Die Sensoreinheit ist mit einem Spalt der Skala gegenüberliegend angeordnet, wobei sich die Breite des Spalts beziehungsweise der betreffende Abstand entlang einer zweiten Richtung erstreckt, die orthogonal zur ersten Richtung (und zur dritten Richtung) orientiert ist.

Als Skala kann beispielsweise eine relativ zur Sensoreinheit drehbare Trommel verstanden werden, die an ihrer Mantelseite eine magnetische Skalierung oder einen magnetischen Code aufweist. Der Spalt erstreckt sich in diesem Fall in radialer Richtung.

Alternativ kann die Skala auch als Scheibe ausgestaltet sein, so dass die magnetische Skalierung oder der magnetische Code an einer Stirnseite der Scheibe liegt. Demnach erstreckt sich dann der Spalt in axialer Richtung.

Als Skala kann aber auch ein linearer Maßstab verstanden werden, so dass dann relative Linearverschiebungen beziehungsweise Linearpositionen messbar sind.

Mit Vorteil ist das Substrat bezüglich der zweiten Richtung zwischen der Detektorstruktur und der Leiterplatte angeordnet.

Vorteilhaft weist die erste Oberfläche zumindest eine Teilfläche auf, die neben dem Substrat auskragend beziehungsweise überstehend angeordnet ist, wobei die auskragende Teilfläche an drei voneinander beabstandeten Auflagepunkten am Gehäuse anschlägt. Die Lage der Auflagepunkte ist so gewählt, dass die Detektorstruktur bezüglich der zweiten Richtung relativ zum Gehäuse positioniert ist.

In weiterer Ausgestaltung der Erfindung weist das Substrat eine Stirnfläche auf, wobei die Stirnfläche an drei voneinander beabstandeten Anschlagpunkten am Gehäuse anschlägt. Die Lage der Anschlagpunkte ist so gewählt, dass die Detektorstruktur bezüglich ihrer Drehlage beziehungsweise Kippposition um eine Achse, die in der zweiten Richtung orientiert ist, bestimmungsgemäß und mit hoher Genauigkeit positioniert ist.

In vorteilhafter Ausgestaltung der Erfindung weist das Substrat eine Stirnfläche auf, wobei die Stirnfläche an drei voneinander beabstandeten Anschlagpunkten am Gehäuse anschlägt. Die Lage zumindest einer der Anschlagpunkte ist so gewählt, dass die Detektorstruktur bezüglich der ersten Richtung relativ zum Gehäuse positioniert ist.

Vorteilhafte Ausbildungen der Erfindung entnimmt man den abhängigen Ansprüchen.

Weitere Einzelheiten und Vorteile der erfindungsgemäßen Sensoreinheit ergeben sich aus der nachfolgenden Beschreibung eines Ausführungsbeispiels anhand der beiliegenden Figuren.

### KURZE BESCHREIBUNG DER ZEICHNUNGEN

- Figur 1: eine Draufsicht auf ein Detektorelement,
- Figur 2: eine Schnittdarstellung des Detektorelements,
- Figur 3: eine perspektivische Ansicht auf ein Detektorelement mit damit verbundenen Platinen,
- Figur 4: eine perspektivische Ansicht eines Gehäuses,
- Figur 5: eine Schnittdarstellung des Gehäuses vor der Montage des Detektorelements,
- Figur 6: eine Schnittdarstellung des Gehäuses nach erfolgter Montage des Detektorelements,
- Figur 7: eine weitere Schnittdarstellung des Gehäuses nach erfolgter Montage des Detektorelements,
- Figur 8: eine Draufsicht auf eine Positionsmesseinrichtung zur Bestimmung einer relativen Winkelstellung.

### BESCHREIBUNG DER AUSFÜHRUNGSFORMEN

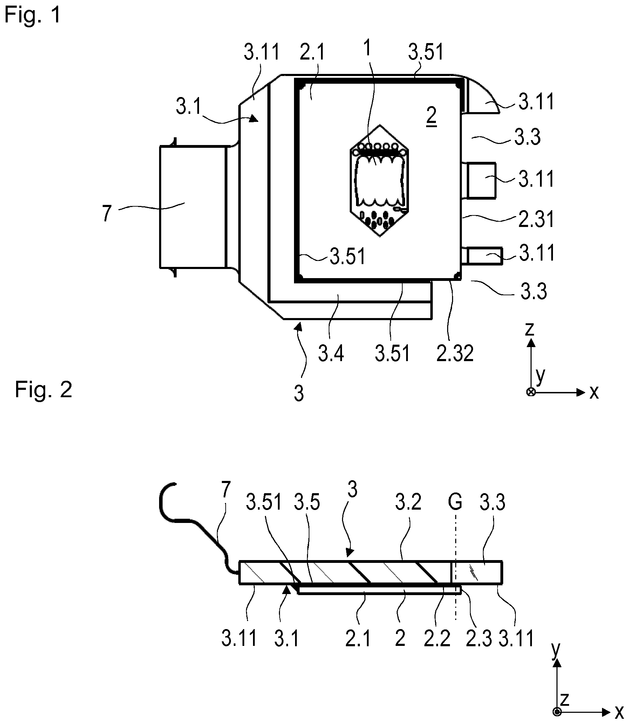

Die Sensoreinheit weist ein Detektorelement gemäß den Figuren 1 und 2 auf. Dieses umfasst im vorgestellten Ausführungsbeispiel eine Detektorstruktur 1, welche magnetoresistive Leiterbahnen aufweist, die auf einem Substrat 2 angeordnet beziehungsweise aufgebracht sind. Die Widerstandswerte der magnetoresistiven Leiterbahnen sind durch ein magnetisches Feld beeinflussbar. Bei Anlegen einer Spannung an die Detektorstruktur 1 beziehungsweise an die Leiterbahnen wird ein durch die Leiterbahnen fließende Strom entsprechend dem vorherrschendem Magnetfeld moduliert.

Im Folgenden wird zur einfachen Beschreibung der räumlichen Verhältnisse auf ein Koordinatensystem Bezug genommen, welches durch eine erste Richtung x, eine zweite Richtung y und eine dritte Richtung z gemäß den Figuren definiert ist.

Das Substrat 2 ist im vorgestellten Ausführungsbeispiel aus Glas hergestellt. Insbesondere ist das Substrat 2 als ein im Wesentlichen rechteckiges Element ausgebildet und weist eine erste Oberfläche 2.1 sowie eine zweite Oberfläche 2.2 auf. Die erste Oberfläche 2.1 erstreckt sich in einer x-z-Ebene und liegt der zweiten Oberfläche 2.2 parallel gegenüber. Auf der ersten Oberfläche 2.1 ist im vorgestellten Ausführungsbeispiel die Detektorstruktur 1 aufgebracht. Ferner weist das Substrat 2 eine Stirnfläche 2.3 auf, die orthogonal zur ersten Oberfläche 2.1 und zur zweiten Oberfläche 2.2 angeordnet ist. Die Stirnfläche 2.3 ist umlaufend und weist einen ersten Bereich 2.31 und einen zweiten Bereich 2.32 auf, wobei im vorgestellten Ausführungsbeispiel der erste Bereich 2.31 orthogonal zum zweiten Bereich 2.32 angeordnet ist (Figur 1). Somit erstreckt sich der erste Bereich 2.31 in einer y-z-Ebene und der zweite Bereich 2.32 in einer x-y-Ebene.

Das Substrat 2 verfügt außerdem über eine Vielzahl von in den Figuren nicht näher dargestellten Durchkontaktierungen oder Vias, welche das Substrat 2 und damit auch die erste Oberfläche 2.1 und die zweite Oberfläche 2.2 in der zweiten Richtung y durchdringen; insofern erstrecken sich die Durchkontaktierungen von der ersten Oberfläche 2.1 bis zur zweiten Oberfläche 2.2 des Substrats 2. Somit ist die Detektorstruktur 1 gemäß einer Through Glass Via Technologie (TGV) elektrisch mit Anschlüssen an der zweiten Oberfläche 2.2 verbunden.

Im vorgestellten Ausführungsbeispiel beträgt die Dicke des Substrats 2 etwa 0,5 mm, wobei die Durchkontaktierungen jeweils einen Durchmesser von etwa 80 µm haben. Als Leitermaterial in den Durchkontaktierungen kann beispielsweise Wolfram verwendet werden.

An der ersten Oberfläche 2.1 wie auch an der zweiten Oberfläche 2.2 können im Sinne einer Umverdrahtung an geeigneten Stellen elektrische Kontakte zu den Leiterbahnen der Detektorstruktur 1, beziehungsweise elektrische Kontakte zu Lotperlen (balls) hergestellt werden.

Auf die erste Oberfläche 2.1 des Substrats 2 beziehungsweise auf die Detektorstruktur 1 können noch eine Isolationsschicht und/oder eine Abdeckfolie aufgebracht werden.

Ferner gehört zum Detektorelement eine Leiterplatte 3 (siehe etwa die Figuren 1 und 2), die eine erste Oberfläche 3.1, eine zweite Oberfläche 3.2 sowie Ausnehmungen 3.3 aufweist. Zunächst wird auf eine Leiterplatte 3 ein Lötstopplack 3.4 aufgetragen, wobei Ränder der Leiterplatte 3 frei bleiben, das heißt, dass in diesen Bereichen kein Lötstopplack 3.4 aufgetragen wird. In der Figur 1 ist die mit Lötstopplack 3.4 versehene Fläche zum Teil vom Substrat 2 abgedeckt.

Im vorgestellten Ausführungsbeispiel ist die Leiterplatte 3 als eine starre Leiterplatte 3 ausgestaltet.

Die Leiterplatte 3 wird nun mit dem Substrat 2 samt Detektorstruktur 1 elektrisch und mechanisch verbunden, so dass die zweite Oberfläche 2.2 des Substrats 2 der ersten Oberfläche 3.1 der Leiterplatte 3 zugewandt ist. Zu diesem Zweck wird ein SMD-Bestückungsverfahren angewendet, bei dem das Substrat 2 mit der Detektorstruktur 1 als BGA-Bauteil (BGA = Ball Grid Array) auf die Leiterplatte 3 mithilfe eines Standard-Reflow-Lötverfahrens bestückt wird. Die Lötkontakte werden durch Auftragen eines Underfillers 3.5 (Figur 2) mechanisch stabilisiert. Dazu wird der Underfiller 3.5 mithilfe einer Nadel appliziert, welche entlang der Stirnfläche 2.3 des Substrats 2 L-förmig geführt wird. Damit eine geeignete Ausbreitung des Underfillers 3.5 stattfindet, wurde der mit Underfiller 3.5 zu vergießende Bereich der Leiterplatte 3 mit dem Lötstopplack 3.4 beschichtet. Der Underfiller 3.5 fließt um die Lötverbindungen herum in den Spalt zwischen Substrat 2 und Leiterplatte 3 und füllt diesen aus. An den Rändern des Substrats 2 weist der Underfiller 3.5 Kehlen 3.51 auf. Wie aus der Figur 1 ersichtlich, laufen die Kehlen 3.51 an der ersten Oberfläche 3.1 nicht vollständig um die Stirnseite 2.3 des Substrats 2 herum. Vielmehr bleiben diejenigen Bereiche der Stirnseite 2.3, die über einer der Ausnehmungen 3.3 angeordnet sind, durch den Underfiller 3.5 unbenetzt. Mit anderen Worten ist an denjenigen Abschnitten der Stirnseite 2.3 wo die zweite Oberfläche 2.2 des Substrats 2 nicht der ersten Oberfläche 3.1 der Leiterplatte 3 gegenüberliegt (nämlich an den Ausnehmungen 3.3) keine Kehle 3.51 vorhanden. Somit existiert eine Gerade G (Figur 2), welche orthogonal zur zweiten Oberfläche 2.1 des Substrats 2 orientiert ist - also im vorgestellten Ausführungsbeispiel parallel zu der zweiten Richtung y - und das Substrat 2 schneidet und welche zudem durch die Ausnehmung 3.1 verläuft.

Das Substrat 2 und die Leiterplatte 3 sind so dimensioniert, dass die Leiterplatte 3 sowohl in der ersten Richtung x als auch in der dritten Richtung z relativ zum Substrat 2 auskragend ist. Demnach ist die Leiterplatte 3 in der Ebene x-z, die parallel zur ersten Oberfläche 3.1 der Leiterplatte 3 orientiert ist, sowohl in der ersten Richtung x als auch in der dritten Richtung z relativ zum Substrat 2 überstehend. Insbesondere liegt das Substrat 2 innerhalb einer gedachten begradigten Hüllkurve einer Außenkontur der Leiterplatte 3. Durch diese Anordnung kann eine vergleichsweise robuste Bauweise des Detektorelements erreicht werden.

Wie beispielsweise in der Figur 1 ersichtlich, weist die erste Oberfläche 3.1 mehrere (hier vier) Teilflächen 3.11 auf, die neben dem Substrat 2 auskragend angeordnet sind. Auf diesen Teilflächen 3.11 ist im vorgestellten Ausführungsbeispiel kein Lötstopplack 3.4 aufgetragen.

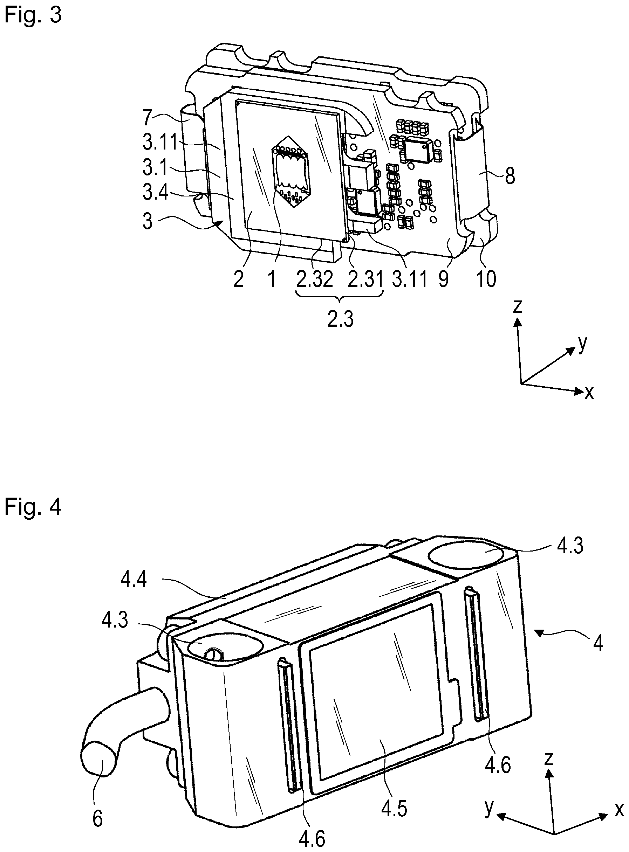

Die Leiterplatte 3 wird gemäß der Figur 3 durch einen Flexleiter 7 mit einer ersten Platine 9 elektrisch verbunden. Auf der ersten Platine 9 befinden sich elektronische Bauelemente zur Auswertung beziehungsweise Weiterverarbeitung der von der Detektoranordnung 1 erzeugten Signale. Weiterhin ist die erste Platine 9 durch einen weiteren Flexleiter 8 mit einer zweiten Platine 10 elektrisch verbunden. Durch eine geeignete Faltung des Flexleiters 7 und des weiteren Flexleiters 8 kann eine vergleichsweise platzsparende Anordnung gemäß der Figur 3 erreicht werden.

Für eine einwandfreie Funktion der Sensoreinheit ist es wichtig, dass das betreffende Detektorelement präzise im Gehäuse 4 eingebaut wird. In der Figur 4 ist ein entsprechendes Gehäuse 4 dargestellt, dass rückseitig durch einen Deckel 4.4 verschlossen ist.

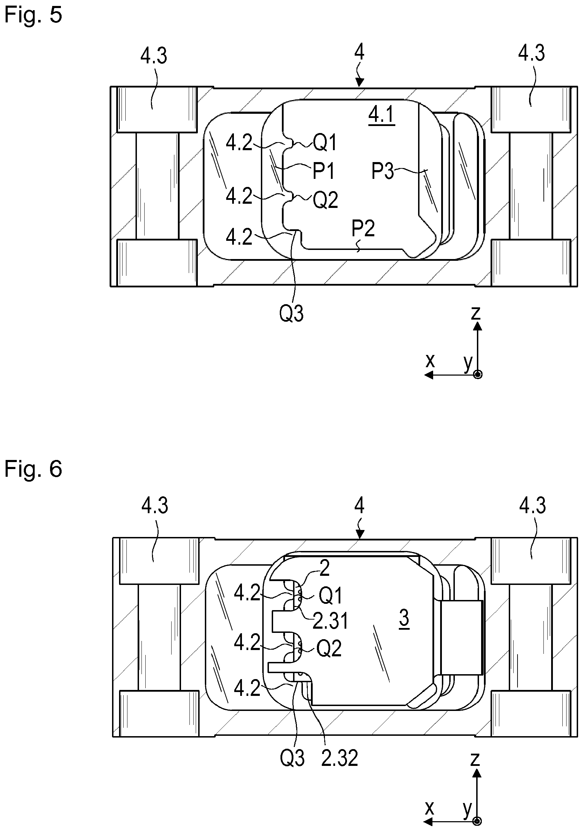

In der Figur 5 ist ein Längsschnitt durch das Gehäuse 4 gezeigt, wobei in dieser Darstellung die Leiterplatte 3 noch nicht eingebaut ist. Demnach weist das Gehäuse 4 ein Fenster 4.1 beziehungsweise eine Öffnung auf sowie zwei Befestigungsbohrungen 4.3. Zur Herstellung einer präzise arbeitenden Sensoreinheit ist es nun wichtig, dass das Detektorelement, also das Substrat 2 mit der Detektorstruktur 1, passgenau relativ zum Gehäuse 4 montiert wird, wobei die Detektorstruktur 1 im Fenster 4.1 angeordnet ist. Die Berandung des Fensters 4.1 ist gehäuseinnenseitig präzise bearbeitet und weist Auskragungen 4.2 beziehungsweise Nase auf. Diese Berandung des Fensters 4.1 dient als Auflage beziehungsweise als Anschlag für das Detektorelement insbesondere für die Leiterplatte 3.

Insbesondere sind im Bereich der Berandung des Fensters 4.1 dem Gehäuse 4 zumindest drei voneinander beabstandete Auflagepunkte P1, P2, P3 zuzuordnen, an denen die Teilflächen 3.11 der ersten Oberfläche 3.1 der Leiterplatte 3 zur Auflage gebracht werden. Die Leiterplatte 3 stützt sich an den Auflagepunkten P1, P2, P3 in der zweiten Richtung y gegen das Gehäuse 4 ab. Im vorgestellten Ausführungsbeispiel befinden sich die Auflagepunkte P1, P2, P3 in einer Ebene, die parallel zur x-z-Ebene orientiert ist. Durch diese Maßnahme ist eine präzise Orientierung beziehungsweise Platzierung des Detektorelements und damit der Detektorstruktur 1 bezüglich einer x-z-Ebene erreichbar. Unerwünschte Verkippungen des Detektorelements um eine Achse parallel zur ersten Richtung x und / oder um eine Achse parallel zur dritten Richtung z können so vermieden werden. Gleichermaßen ist die Position des Detektorelements beziehungsweise der Detektorstruktur 1 in der zweiten Richtung y relativ zum Gehäuse 4 nach dem Herstellen der Anschläge an den Auflagepunkten P1, P2, P3 präzise gegeben. Die Leiterplatte 3 beziehungsweise das Gehäuse 4 kann selbstverständlich auch so ausgestaltet werden, dass mehr als drei Auflagepunkte vorliegen. Sofern eine präzise Bearbeitung des Gehäuses 4 beziehungsweise der Berandung des Fensters 4.1 erfolgt ist, kann auch eine flächige Auflage vorliegen.

Weiterhin sind dem Gehäuse 4 zumindest drei voneinander beabstandete Anschlagpunkte Q1, Q2, Q3 zuzuordnen, an denen die Stirnfläche 2.3 des Substrats 2 zum Anschlag gebracht wird. Im vorgestellten Ausführungsbeispiel schlägt die Stirnfläche 2.3 an den Auskragungen 4.2 des Gehäuses 4 an, die im Bereich der Berandung des Fensters 4.1 verortet sind. Insbesondere berührt das Glas des Substrats 2 an der Stirnfläche 2.3 das Gehäuse 4 beziehungsweise die Auskragungen 4.2. Auf diese Weise ist das Detektorelement beziehungsweise die Detektorstruktur 1 bezüglich einer Drehung um eine Achse parallel zur zweiten Richtung y relativ zum Gehäuse 4 genau montiert. Zudem ist so das Detektorelement beziehungsweise die Detektorstruktur 1 auch in der ersten Richtung x als auch in der dritten Richtung z relativ zum Gehäuse 4 genau ausgerichtet angeordnet.

Nachdem das Detektorelement beziehungsweise die Detektorstruktur 1 durch die oben genannten Maßnahmen präzise relativ zum Gehäuse ausgerichtet ist, kann das Detektorelement beispielsweise durch eine Klebeverbindung am Gehäuse fixiert werden.

Anschließend kann das Kabel 6 mit einem Steckverbinder, welcher auf der zweiten Platine angeordnet ist, verbunden werden. Zudem wird vor das Fenster 4.1 eine dünne Metallfolie 4.5 befestigt, die an der Innenseite eine isolierende Schicht aufweist und zum Schutz der Detektorstruktur 1 dient. Zum Abschluss der Montage der Sensoreinheit wird der Deckel 4.4 geschlossen.

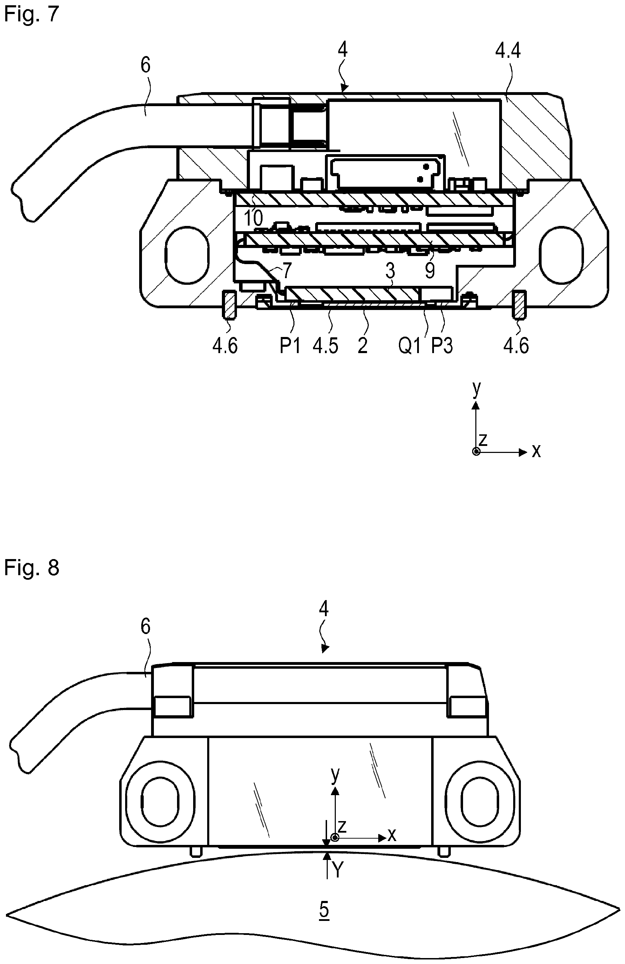

In der Figur 8 ist eine Positionsmesseinrichtung gezeigt, welche oben beschrieben der Sensoreinheit aufweist sowie eine Maßverkörperung 5.

Die Maßverkörperung 5 ist im vorgestellten Ausführungsbeispiel aus ferromagnetischem Material hergestellt, beispielsweise aus einer Legierung mit den Komponenten Eisen, Chrom, Kobalt und Molybdän. Vorzugsweise ist die Maßverkörperung 5 auf einem in den Figuren nicht näher dargestellten Trägerkörper, etwa einem Ring befestigt.

Um eine insbesondere absolute Codierung der Maßverkörperung 1 zu erreichen, ist diese derart magnetisiert, dass entlang der ersten Richtung x beziehungsweise entlang der Umfangsrichtung, die hier die Messrichtung darstellt, abwechselnd Nord- und Südpole N, S vorliegen. Die erzeugte Magnetisierung ist also eine permanentmagnetische Magnetisierung. Üblicherweise ist so ein Bit-Muster erzeugt, welches in Umfangsrichtung einzelne Bits aufweist.

Die Sensoreinheit oder Abtasteinheit ist in einem Arbeitsabstand Y, der parallel zur y-Richtung und orthogonal zur ersten Richtung x orientiert ist relativ zur Maßverkörperung 5 angeordnet. In der Sensoreinheit werden von der Detektorstruktur 1 die magnetischen Felder der Maßverkörperung 5 in elektrische Rohsignale umgewandelt, die einem Signalaufbereitungsmittel beziehungsweise einer elektronischen Schaltung zugeführt werden. Aus den Rohsignalen werden digitale Signale erzeugt.

Durch das so erzeugte Signal kann ein Codewort gebildet werden, welches Auskunft über die absolute Relativposition zwischen der Sensoreinheit und der Maßverkörperung 5 liefert.

## Patentansprüche

1. Sensoreinheit zum Abtasten einer magnetischen Skala (5) umfassend:
¬ eine für Magnetfelder empfindliche Detektorstruktur (1), die auf einem Substrat (2) angeordnet ist,
¬ eine Leiterplatte (3) und
¬ ein Gehäuse (4), wobei
das Substrat (2) auf einer ersten Oberfläche (3.1) der Leiterplatte (3) derart befestigt ist, dass das Substrat (2) zwischen der Detektorstruktur (1) und der Leiterplatte (3) angeordnet ist, wobei zur genauen Positionierung der Detektorstruktur (1) relativ zum Gehäuse (4)
a) die erste Oberfläche (3.1) zumindest eine Teilfläche (3.11) aufweist, die neben dem Substrat (2) auskragend angeordnet ist, wobei die auskragende Teilfläche (3.11) am Gehäuse (4) anschlägt und
b) das Substrat (2) eine Stirnfläche (2.3) aufweist, wobei die Stirnfläche (2.3) am Gehäuse (4) anschlägt, wobei
das Substrat (2) Durchkontaktierungen aufweist, die sich von einer ersten Oberfläche (2.1) des Substrats (2) bis zu einer zweiten Oberfläche (2.2) des Substrats (2) erstrecken.

2. Sensoreinheit gemäß dem Anspruch 1, wobei die erste Oberfläche (3.1) zumindest eine Teilfläche (3.11) aufweist, die neben dem Substrat (2) auskragend angeordnet ist, wobei die auskragende Teilfläche (3.11) an drei voneinander beabstandeten Auflagepunkten (P1, P2, P3) am Gehäuse (4) anschlägt.

3. Sensoreinheit gemäß einem der vorhergehenden Ansprüche, wobei das Substrat (2) eine Stirnfläche (2.3) aufweist, wobei die Stirnfläche (2.3) an drei voneinander beabstandeten Anschlagpunkten (Q1, Q2, Q3) am Gehäuse (4) anschlägt.

4. Sensoreinheit gemäß dem Anspruch 3, wobei das Gehäuse (4) Auskragungen (4.2) aufweist und die Stirnfläche (2.3) an den Auskragungen (4.2) anschlägt.

5. Sensoreinheit gemäß dem Anspruch 3 oder 4, wobei das Substrat (2) eine Stirnfläche (2.3) aufweist, die einen ersten Bereich (2.31) und einen zweiten Bereich (2.32) umfasst, wobei die beiden Bereiche (2.31, 2.32) winklig zueinander angeordnet sind, wobei zumindest einer der Anschlagpunkte (Q1, Q2) am ersten Bereich (2.31) und einer der Anschlagpunkte (Q3) am zweiten Bereich (2.32) verortet ist.

6. Sensoreinheit gemäß dem Anspruch 5, wobei zwei der Anschlagpunkte (Q1, Q2) am ersten Bereich (2.31) und einer der Anschlagpunkte (Q3) am zweiten Bereich (2.32) verortet ist.

7. Sensoreinheit gemäß einem der vorhergehenden Ansprüche, wobei die Leiterplatte (3) zumindest eine Ausnehmung (3.3) aufweist und eine Gerade (G), die orthogonal zur zweiten Oberfläche (2.1) des Substrats (2) orientiert ist und durch die Ausnehmung (3.3) verläuft, das Substrat (2) schneidet.

8. Sensoreinheit gemäß einem der vorhergehenden Ansprüche, wobei das Gehäuse (4) ein Fenster (4.1) aufweist, wobei die Detektorstruktur (1) im Fenster (4.1) angeordnet ist.

9. Sensoreinheit gemäß einem der vorhergehenden Ansprüche, wobei die Leiterplatte (3) bezüglich einer Ebene (x-z) parallel zur ersten Oberfläche (3.1) der Leiterplatte (3) sowohl in einer ersten Richtung (x) als auch in einer dritten Richtung (z) relativ zum Substrat (2) auskragend angeordnet ist.

10. Positionsmesseinrichtung umfassend eine Sensoreinheit gemäß einem der vorhergehenden Ansprüche sowie eine Skala (5), die durch die Sensoreinheit in einer Weise abtastbar ist, dass eine Relativverschiebung zwischen der Skala und der Sensoreinheit in einer ersten Richtung (x) messbar ist, wobei die Sensoreinheit mit einem Spalt (Y) der Skala (5) gegenüberliegend angeordnet ist, wobei sich die Breite des Spalts (Y) entlang einer zweiten Richtung (y) erstreckt, die orthogonal zur ersten Richtung (x) orientiert ist.

11. Positionsmesseinrichtung gemäß dem Anspruch 10, wobei das Substrat (2) bezüglich zweiten Richtung (y) zwischen der Detektorstruktur (1) und der Leiterplatte (3) angeordnet ist.

12. Positionsmesseinrichtung gemaß dem Anspruch 10 oder 11, wobei die erste Oberfläche (3.1) zumindest eine Teilfläche (3.11) aufweist, die neben dem Substrat (2) auskragend angeordnet ist, wobei die auskragende Teilfläche (3.11) an drei voneinander beabstandeten Auflagepunkten (P1, P2, P3) am Gehäuse (4) anschlägt, wobei die Lage der Auflagepunkte (P1, P2, P3) so gewählt ist, dass die Detektorstruktur (1) bezüglich der zweiten Richtung (y) relativ zum Gehäuse (4) positioniert ist.

13. Positionsmesseinrichtung gemäß dem Anspruch 10, 11 oder 12, wobei das Substrat (2) eine Stirnfläche (2.3) aufweist, wobei die Stirnfläche (2.3) an drei voneinander beabstandeten Anschlagpunkten (Q1, Q2, Q3) am Gehäuse (4) anschlägt, wobei die Lage der Anschlagpunkte (Q1, Q2, Q3) so gewählt ist, dass die Detektorstruktur (1) bezüglich ihrer Kippposition um eine Achse, die in der zweiten Richtung (y) orientiert ist, positioniert ist.

## Claims

1. Sensor unit for scanning a magnetic scale (5), comprising:
- a detector structure (1) which is sensitive to magnetic fields and is arranged on a substrate (2),
- a printed circuit board (3), and
- a housing (4), wherein
the substrate (2) is fastened on a first surface (3.1) of the printed circuit board (3) in such a manner that the substrate (2) is arranged between the detector structure (1) and the printed circuit board (3), wherein, in order to accurately position the detector structure (1) relative to the housing (4),
a) the first surface (3.1) has at least one partial area (3.11) which is arranged in a projecting manner beside the substrate (2), wherein the projecting partial area (3.11) abuts the housing (4), and
b) the substrate (2) has an end face (2.3), wherein the end face (2.3) abuts the housing (4), wherein
the substrate (2) has plated through-holes which extend from a first surface (2.1) of the substrate (2) to a second surface (2.2) of the substrate (2).

2. Sensor unit according to Claim 1, wherein the first surface (3.1) has at least one partial area (3.11) which is arranged in a projecting manner beside the substrate (2), wherein the projecting partial area (3.11) abuts the housing (4) at three supporting points (P1, P2, P3) which are spaced apart from one another.

3. Sensor unit according to one of the preceding claims, wherein the substrate (2) has an end face (2.3), wherein the end face (2.3) abuts the housing (4) at three abutment points (Q1, Q2, Q3) which are spaced apart from one another.

4. Sensor unit according to Claim 3, wherein the housing (4) has projections (4.2) and the end face (2.3) abuts the projections (4.2).

5. Sensor unit according Claim 3 or 4, wherein the substrate (2) has an end face (2.3) comprising a first region (2.31) and a second region (2.32), wherein the two regions (2.31, 2.32) are arranged at an angle to one another, wherein at least one of the abutment points (Q1, Q2) is located in the first region (2.31) and one of the abutment points (Q3) is located in the second region (2.32).

6. Sensor unit according to Claim 5, wherein two of the abutment points (Q1, Q2) are located in the first region (2.31) and one of the abutment points (Q3) is located in the second region (2.32).

7. Sensor unit according to one of the preceding claims, wherein the printed circuit board (3) has at least one recess (3.3), and a straight line (G) which is oriented orthogonal to the second surface (2.1) of the substrate (2) and runs through the recess (3.3) intersects the substrate (2).

8. Sensor unit according to one of the preceding claims, wherein the housing (4) has a window (4.1), wherein the detector structure (1) is arranged in the window (4.1).

9. Sensor unit according to one of the preceding claims, wherein the printed circuit board (3) is arranged in a projecting manner with respect to a plane (x-z) parallel to the first surface (3.1) of the printed circuit board (3) both in a first direction (x) and in a third direction (z) relative to the substrate (2).

10. Position measuring device comprising a sensor unit according to one of the preceding claims and a scale (5) which can be scanned by the sensor unit in such a manner that a relative shift between the scale and the sensor unit in a first direction (x) can be measured, wherein the sensor unit is arranged opposite the scale (5) with a gap (Y), wherein the width of the gap (Y) extends along a second direction (y) which is oriented orthogonal to the first direction (x).

11. Position measuring device according to Claim 10, wherein the substrate (2) is arranged with respect to a second direction (y) between the detector structure (1) and the printed circuit board (3).

12. Position measuring device according to Claim 10 or 11, wherein the first surface (3.1) has at least one partial area (3.11) which is arranged in a projecting manner beside the substrate (2), wherein the projecting partial area (3.11) abuts the housing (4) at three supporting points (P1, P2, P3) which are spaced apart from one another, wherein the position of the supporting points (P1, P2, P3) is selected in such a manner that the detector structure (1) is positioned with respect to the second direction (y) relative to the housing (4).

13. Position measuring device according to Claim 10, 11 or 12, wherein the substrate (2) has an end face (2.3), wherein the end face (2.3) abuts the housing (4) at three abutment points (Q1, Q2, Q3) which are spaced apart from one another, wherein the position of the abutment points (Q1, Q2, Q3) is selected in such a manner that the detector structure (1) is positioned with respect to its tilt position about an axis which is oriented in the second direction (y).

## Revendications

1. Unité de capteur permettant de balayer une graduation magnétique (5), comprenant :
- une structure de détection (1) sensible aux champs magnétiques qui est disposée sur un substrat (2),
- une carte de circuits imprimés (3), et
- un boîtier (4), dans laquelle
le substrat (2) est fixé à une première surface (3.1) de la carte de circuits imprimés (3) de telle sorte que le substrat (2) est disposé entre la structure de détection (1) et la carte de circuits imprimés (3), dans laquelle, pour le positionnement précis de la structure de détection (1) par rapport au boîtier (4),
a) la première surface (3.1) présente au moins une surface partielle (3.11) qui est disposée en saillie à côté du substrat (2), la surface partielle en saillie (3.11) venant en butée contre le boîtier (4), et
b) le substrat (2) présente une surface frontale (2.3), la surface frontale (2.3) venant en butée contre le boîtier (4), dans laquelle
le substrat (2) présente des métallisations qui s'étendent d'une première surface (2.1) du substrat (2) à une deuxième surface (2.2) du substrat (2).

2. Unité de capteur selon la revendication 1, dans laquelle la première surface (3.1) présente au moins une surface partielle (3.11) qui est disposée en saillie à côté du substrat (2), la surface partielle en saillie (3.11) venant en butée contre le boîtier (4) en trois points d'appui (P1, P2, P3) espacés les uns des autres.

3. Unité de capteur selon l'une quelconque des revendications précédentes, dans laquelle le substrat (2) présente une surface frontale (2.3), la surface frontale (2.3) venant en butée contre le boîtier (4) en trois points de butée (Q1, Q2, Q3) espacés les uns des autres.

4. Unité de capteur selon la revendication 3, dans laquelle le boîtier (4) présente des saillies (4.2) et la surface frontale (2.3) vient en butée contre les saillies (4.2).

5. Unité de capteur selon la revendication 3 ou 4, dans laquelle le substrat (2) présente une surface frontale (2.3) qui comprend une première zone (2.31) et une deuxième zone (2.32), les deux zones (2.31, 2.32) étant disposées selon un angle l'une par rapport à l'autre, dans laquelle au moins l'un des points de butée (Q1, Q2) est localisé au niveau de la première zone (2.31) et l'un des points de butée (Q3) est localisé au niveau de la deuxième zone (2.32).

6. Unité de capteur selon la revendication 5, dans laquelle deux des points de butée (Q1, Q2) sont localisés au niveau de la première zone (2.31), et l'un des points de butée (Q3) est localisé au niveau de la deuxième zone (2.32).

7. Unité de capteur selon l'une quelconque des revendications précédentes, dans laquelle la carte de circuits imprimés (3) présente au moins un évidement (3.3), et une droite (G) qui est orientée de manière orthogonale à la deuxième surface (2.1) du substrat (2) et s'étend à travers l'évidement (3.3) coupe le substrat (2).

8. Unité de capteur selon l'une quelconque des revendications précédentes, dans laquelle le boîtier (4) présente une fenêtre (4.1), la structure de détection (1) étant disposée dans la fenêtre (4.1).

9. Unité de capteur selon l'une quelconque des revendications précédentes, dans laquelle la carte de circuits imprimés (3) est disposée concernant un plan (x-z) en parallèle à la première surface (3.1) de la carte de circuits imprimés (3) aussi bien dans une première direction (x) que dans une troisième direction (z) en saillie par rapport au substrat (2).

10. Dispositif de mesure de position, comprenant une unité de capteur selon l'une quelconque des revendications précédentes ainsi qu'une graduation (5) qui peut être balayée par l'unité de capteur de telle sorte qu'un décalage relatif entre la graduation et l'unité de capteur peut être mesuré dans une première direction (x), l'unité de capteur étant disposée à l'opposé de la graduation (5) avec un entrefer (Y), la largeur de l'entrefer (Y) s'étendant le long d'une deuxième direction (y) qui est orientée de manière orthogonale à la première direction (x).

11. Dispositif de mesure de position selon la revendication 10, dans lequel le substrat (2) est disposé concernant la deuxième direction (y) entre la structure de détection (1) et la carte de circuits imprimés (3).

12. Dispositif de mesure de position selon la revendication 10 ou 11, dans lequel la première surface (3.1) présente au moins une surface partielle (3.11) qui est disposée en saillie à côté du substrat (2), la surface partielle en saillie (3.11) venant en butée contre le boîtier (4) en trois points d'appui (P1, P2, P3) espacés les uns des autres, la position des points d'appui (P1, P2, P3) étant choisie de telle sorte que concernant la deuxième direction (y) la structure de détection (1) est positionnée par rapport au boîtier (4) .

13. Dispositif de mesure de position selon la revendication 10, 11 ou 12, dans lequel le substrat (2) présente une face frontale (2.3), la face frontale (2.3) venant en butée contre le boîtier (4) en trois points de butée (Q1, Q2, Q3) espacés les uns des autres, la position des points de butée (Q1, Q2, Q3) étant choisie de telle sorte que la structure de détection (1) concernant sa position de basculement est positionnée autour d'un axe qui est orienté dans la deuxième direction (y).
